# FASCICULE DE BREVET EUROPEEN

(11) **EP 0 634 313 B1**
(45) Date de publication et mention de la délivrance du brevet: **23.04.1997**
(21) Numéro de dépôt: 94401545.2
(22) Date de dépôt: 05.07.1994
(51) Int. Cl.: B62D 1/16, F16L 3/14

(54) **Corps de colonne de direction pour véhicule automobile**
Lenksäulengehäuse für ein Kraftfahrzeug
Steering column frame for an automotive vehicle

(30) Priorité: 16.07.1993 FR 9308776
(43) Date de publication de la demande: 18.01.1995
(73) Titulaire: ECIA - EQUIPEMENTS ET COMPOSANTS POUR L'INDUSTRIE AUTOMOBILE, F-25400 Audincourt (FR)
(72) Inventeur: Mouhot, Frédéric, F-25420 Voujeaucourt (FR); Hoblingre, André, F-25700 Valentigney (FR)
(74) Mandataire: Habasque, Etienne Joel Jean-François

(56) Documents cités:
- DE-A- 3 341 918
- SOVIET PATENTS ABSTRACTS Section PQ, Week 9224, 21 Août 1992 Derwent Publications Ltd., London, GB; Class Q22, AN 92-198777 & SU-A-1 678 683 (LENIN KOMSOMOL CAR WKS) 23 Septembre 1991
- H. POSCHL 'Verbindungselemente der Feinwerktechnik' 1954 , SPRINGER , BERLIN, DE * page 60, ligne 1 - ligne 4; figure 438 * * page 57, alinéa 4; figure 426 *

## Description

La présente invention concerne un corps de colonne de direction pour véhicule automobile, sur lequel est fixée au moins une bride de liaison de ce corps au reste de la structure du véhicule.

Dans l'état de la technique, la ou chaque bride de liaison est fixée sur le corps de colonne de direction par exemple au moyen d'un cordon de soudure.

Cependant, ce cordon de soudure présente un certain nombre d'inconvénients.

En effet, la réalisation de celui-ci est relativement longue et donc d'un prix de revient élevé.

Par ailleurs, la réalisation de ce cordon de soudure est également relativement complexe du fait de la précision requise, et pose des problèmes de qualité et de fiabilité de la pièce obtenue.

On pourra également se reporter au document SU-A-1 678 683 qui décrit un corps de colonne conforme au préambule de la revendication 1.

Le but de l'invention est donc de résoudre ces problèmes.

A cet effet, l'invention a pour objet un corps de colonne de direction pour véhicule automobile, sur lequel est fixée au moins une bride de liaison de ce corps au reste de la structure du véhicule, par l'intermédiaire d'une collerette de la bride, entourant le corps, caractérisé en ce que la collerette de la ou chaque bride est fixée sur le corps par sertissage entre des déformations radiales vers l'extérieur du corps.

Avantageusement, il est prévu des moyens de blocage en rotation de la ou de chaque bride et du corps l'un par rapport à l'autre.

L'invention sera mieux comprise à l'aide de la description qui va suivre, donnée uniquement à titre d'exemple et faite en se référant aux dessins annexés, sur lesquels :

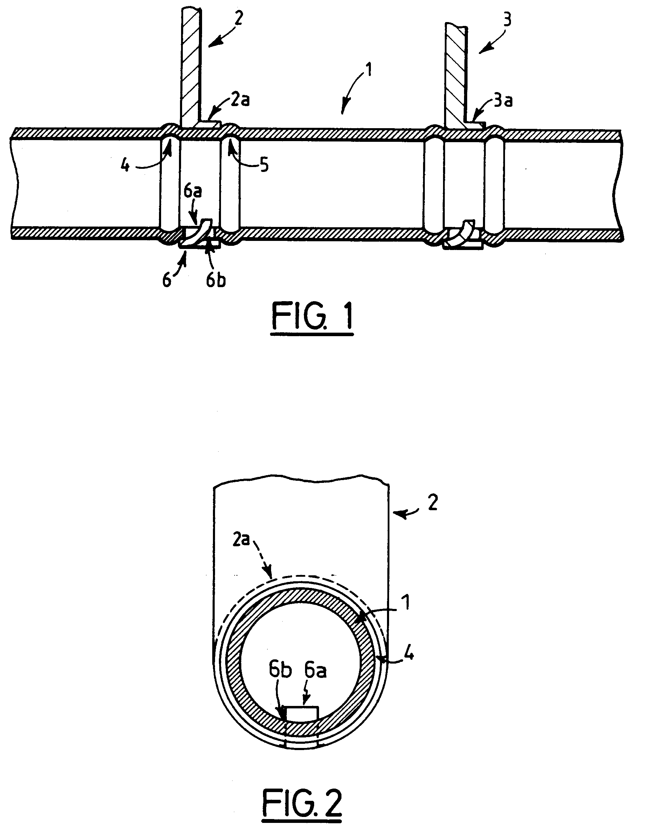

- la Fig.1 représente une vue schématique de côté en coupe d'un mode de réalisation d'un corps de colonne de direction selon l'invention; et
- la Fig.2 représente une vue en coupe transversale d'un corps de colonne selon l'invention, illustrant l'implantation de moyens de blocage en rotation d'une bride et du corps.

Ainsi qu'on peut le voir sur ces figures, un corps de colonne de direction pour véhicule automobile est désigné par la référence générale 1 et au moins une bride de liaison de ce corps au reste de la structure du véhicule, est fixée sur ce corps.

Dans l'exemple illustré, deux brides de liaison 2 et 3 sont fixées sur le corps.

Ces brides de liaison sont par exemple disposées à proximité de chaque extrémité du corps 1.

Alors que dans l'état de la technique, la fixation de ces brides sur le corps est assurée par un cordon de soudure, dans le corps selon l'invention, la ou chaque bride de liaison est fixée par sertissage de collerettes 2a, 3a de celles-ci, entre des déformations axiales vers l'extérieur du corps.

C'est ainsi par exemple que la collerette 2a de la bride 2 est sertie sur le corps 1 entre deux déformations radiales vers l'extérieur 4 et 5 formées sur ce corps.

Ces déformations radiales du corps sont obtenues par toute technique appropriée, comme par exemple par reflux du matériau lors d'une mise en compression axiale du corps.

On conçoit alors que ce sertissage permet de supprimer l'opération de soudure de la bride sur le corps qui présentait les inconvénients mentionnés précédemment.

Des moyens de blocage en rotation de la ou de chaque bride et du corps l'un par rapport à l'autre peuvent également être prévus, comme cela est illustré sur ces figures.

Ces moyens de blocage peuvent par exemple être constitués par des parties en saillie et en creux complémentaires de la bride et du corps, et sont désignés par la référence générale 6 sur ces figures.

Dans l'exemple illustré sur ces figures, la bride 2 comporte une partie en saillie 6a vers l'intérieur adaptée pour s'engager dans une partie en creux 6b du corps pour assurer un blocage angulaire en position de celle-ci par rapport au corps.

Il va de soi bien entendu que les déformations du corps peuvent être des déformations périphériques continues ou discontinues de celui-ci et que ces déformations peuvent également être obtenues par introduction d'un outil de type classique dans le corps, pour provoquer une expansion de celui-ci permettant d'obtenir le sertissage.

On conçoit de plus que cette opération de déformation radiale du corps permet d'obtenir une fixation sous contrainte de la bride sur le corps, ce qui améliore encore la qualité de la liaison.

## Revendications

1. Corps de colonne de direction pour véhicule automobile, sur lequel est fixée au moins une bride de liaison (2,3) de ce corps au reste de la structure du véhicule, par l'intermédiaire d'une collerette (2a,3a) de la bride, entourant le corps (1), caractérisé en ce que la collerette (2a,3a) de la ou chaque bride est fixée sur le corps (1) par sertissage entre des déformations radiales vers l'extérieur (4,5) du corps.

2. Corps selon la revendication 1, caractérisé en ce qu'il est prévu des moyens (6) de blocage en rotation de la ou de chaque bride et du corps l'un par rapport à l'autre.

3. Corps selon la revendication 2, caractérisé en ce que les moyens de blocage comprennent des parties en saillie et en creux complémentaires (6a,6b) du corps et de la ou de chaque bride.

## Claims

1. Steering column body for a motor vehicle, on which is fixed at least one flange (2, 3) for connecting this body to the rest of the structure of the vehicle, through the intermediary of a collar (2a, 3a) of the flange, surrounding the body (1), characterised in that the collar (2a, 3a) of the or each flange is fixed on the body (1) by crimping between radial deformations towards the exterior (4, 5) of the body.

2. Body according to Claim 1, characterised in that means (6) are provided for locking in rotation of the or each flange and the body with respect to one another.

3. Body according to Claim 2, characterised in that the locking means comprise complementary projecting and recessed parts (6a, 6b) of the body and of the or each flange.

## Patentansprüche

1. Lenksäulengehäuse für ein Kraftfahrzeug, an dem mindestens ein Flansch (2, 3) für die Verbindung des Lenksäulengehäuses mit der restlichen Struktur dem Kraftfahrzeuges vorgesehen ist, welche mit Hilfe eines Kragens (2a, 3a) des Flansches hergestellt wird, der das Lenksäulengehäuse (1) umgibt,
**dadurch gekennzeichnet, daß**
dieser Kragen (2a, 3a) des oder der Flansche an dem Lenksäulengehäuse (1) mit Hilfe einer Quetschverbindung zwischen den nach außen verlaufenden radialen Verformungen (4, 5) des Lenksäulengehäuses befestigt wird.

2. Lenksaulengehäuse nach Anspruch 1,
**dadurch gekennzeichnet, daß**
Mittel (6) für die drehfeste Blockierung das oder der Flansche und das Lenksäulengehäuses untereinander vorgesehen sind.

3. Lenksäulengehäuse nach Anspruch 2,
**dadurch gekennzeichnet, daß**
diese Blockiermittel sich ergänzende hervorspringende und vertiefte Teile (6a, 6b) des Lenksaulengehäuses und des oder der Flansche aufweisen.
